(19) Europäisches Patentamt

European Patent Office

Office européen des brevets

(11) **EP 1 112 804 B1**

(12) **EUROPEAN PATENT SPECIFICATION**

(45) Date of publication and mention
of the grant of the patent:
**09.08.2006 Bulletin 2006/32**

(51) Int Cl.:
***B23K 35/30*** *(2006.01)*

(21) Application number: **00128443.9**

(22) Date of filing: **22.12.2000**

(54) **Welding material and arc welding method for low carbon martensitic stainless steel**

Schweisszusatzwerkstoff und Verfahren zum Lichtbogenschweissen von niedriggekohlten martensitischen rostfreien Stahl

Matériau d'apport et procédé pour le soudage à l'arc d'acier inoxydable martensitique à faible teneur en carbone

(84) Designated Contracting States:
**AT DE GB NL SE**

(30) Priority: **28.12.1999 JP 37228099**
**31.08.2000 JP 2000262578**

(43) Date of publication of application:
**04.07.2001 Bulletin 2001/27**

(73) Proprietors:
• **JFE Steel Corporation**
**Tokyo (JP)**
• **Nippon Welding Rod Co.,Ltd**
**Tokyo 104-0061 (JP)**

(72) Inventors:
• **Miyata, Yukio,**
**Chita Works**
**Handa-shi,**
**Aichi 475-8611 (JP)**
• **Kimura, Mitsuo,**
**Chita Works**
**Handa-shi,**
**Aichi 475-8611 (JP)**
• **Toyooka, Takaaki,**
**Chita Works**
**Handa-shi,**
**Aichi 475-8611 (JP)**
• **Ishii, Hideaki,**
**Technical Research Laboratories**
**Chiba-shi,**
**Chiba 260-0835 (JP)**

• **Yasuda, Koichi,**
**Technical Research Laboratories**
**Chiba-shi,**
**Chiba 260-0835 (JP)**
• **Sango, Tetsuya**
**Hamakita-shi,**
**Shizuoka 434-0012 (JP)**
• **Takatsu, Tamao**
**Hamakita-shi,**
**Shizuoka 434-0012 (JP)**
• **Ohmae, Takashi**
**Hamakita-shi,**
**Shizuoka 434-0012 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 732 418**          **EP-A- 0 953 401**
**FR-A- 1 581 549**

• **PATENT ABSTRACTS OF JAPAN vol. 1998, no. 04, 31 March 1998 (1998-03-31) & JP 09 327721 A (NKK CORP), 22 December 1997 (1997-12-22)**
• **PATENT ABSTRACTS OF JAPAN vol. 1995, no. 10, 30 November 1995 (1995-11-30) & JP 07 185879 A (NIPPON STEEL CORP), 25 July 1995 (1995-07-25)**
• **PATENT ABSTRACTS OF JAPAN vol. 017, no. 554 (C-1118), 6 October 1993 (1993-10-06) & JP 05 156409 A (NIPPON STEEL CORP), 22 June 1993 (1993-06-22)**

**Description**

BACKGROUND OF THE INVENTION

1. Field of the Invention

The present invention relates to an arc welding method for low carbon martensitic stainless steel materials and, more specifically, to a welding material which can provide a weld zone having superior low temperature toughness and corrosion resistance. This is done without the need of pre-heating or post-welding heat treatment(PWHT). The invention further relates to a novel arc welding material.

2. Description of the Related Art

More and more oil and natural gas produced recently contains wet carbon dioxide and hydrogen sulfide. This substantially corrodes carbon steel and low alloy steel. To transport these corrosive oil and natural gas materials, a corrosion inhibitor is generally added to prevent corrosion of line pipes and steel tubes.

However, the addition of a corrosion inhibitor increases costs, and its use is becoming more restricted for environmental reasons. Accordingly, a steel pipe having superior corrosion resistance, even without the addition of a corrosion inhibitor, has been required recently.

Duplex stainless steel has been used for corrosion resistance in line pipes in some applications, but it has a disadvantage that its material costs are high. Therefore, application of martensitic stainless steel, which has appropriate corrosion resistance and is not as expensive as duplex stainless steel, has been needed.

In response to such a need, for example, Japanese Unexamined Patent Application Publication Nos. 4-99154 and 4-99155 proposed low carbon martensitic stainless steel pipes for line pipes which have reduced amounts of carbon and nitrogen and which contain austenite stabilizing elements and 11 to 15% of chromium, and which are superior in weldability and corrosion resistance in a carbon dioxide-containing environment.

These low carbon martensitic stainless steel pipes have improved weldability due to the reduced amounts of carbon and nitrogen, which allows pre-heating and PWHT to be omitted. Therefore, the low carbon martensitic stainless steel pipes have markedly improved weldability as compared to the conventional martensitic stainless steel pipes.

Line pipes are jointed by girth welding. Several welding materials have been used, and each welding material has problems.

For example, a martensitic stainless steel welding material which is a matching material has disadvantages that the toughness of the weld metal is low; and the weld metal is extremely hard and prone to cold cracking and, therefore, requires pre-heating or PWHT, which lowers productivity of welding.

On the other hand, an austenitic stainless steel or nickel base super alloy welding material has superior corrosion resistance in the weld zone, but is prone to so-called "undermatching," with the strength of the weld zone inferior to that of the base metal.

As for duplex stainless steel welding materials, 22 Cr-based duplex stainless steel welding materials may not provide enough strength in the weld zone to obtain Grade X80 strength which is general strength of martensitic stainless steel line pipes, and more expensive 25 Cr-based duplex stainless steel welding materials should be used for welding. Moreover, the strength of duplex stainless steel generally decreases with an increase in temperature more drastically than that of martensitic stainless steel. Therefore, although the resulting structure is in a state of over-matching at room temperature, it may turn into undermatching at 100 to 200˚C even when 25Cr-based duplex stainless steel is used. Furthermore, it is a concern that welding with a duplex stainless steel welding material may cause preferential corrosion attributable to the difference in chemical components between the weld zone and the base metal.

With this being the situation, an inexpensive, highly strong, matching welding material which can provide a weld metal having high toughness and high corrosion resistance and which is superior in productivity of welding has been required as a welding material for low carbon martensitic stainless steel.

In response to the need, Japanese Unexamined Patent Application Publication No. 7-185879 proposed a component system which contains 0.01 to 0.04 % by weight of carbon provided the total amount of carbon and nitrogen is 0.02 to 0.06 % by weight, 0.01 to 0.5 % by weight of silicon, 0.1 to 2.0 % by weight of manganese, 11.0 to 15.0 % by weight of chromium, 3.5 to 7.0 % by weight of nickel, 0.7 to 3.0 % by weight of molybdenum, and 0.01 to 0.2 % by weight of niobium and comprises the balance of iron and inevitable impurities.

However, the technology described in Japanese Unexamined Patent Application Publication No. 7-185879 can provide a weld metal which has only a toughness of approximately 100 J in terms of Charpy absorbed energy at 0˚C and has a problem about the productivity of welding, because it needs PWHT for one hour or longer to obtain a weld metal having this level of toughness.

The laying of pipe lines is required to be completed in a short period of time. In particular, line pipes to be laid subsea are generally subjected to girth weld on the ship for laying. Because the cost of the ship itself is expensive, it is essential to shorten the welding time on the ship for laying. For this reason, a welding material which requires time-consuming pre-heating and PWHT tends to be avoided. Moreover, pipe lines are often laid in frigid environments and, therefore, are required to have high toughness at low temperatures, for example at -40˚C.

Prior art EP-A1-0 953 401 discloses a welding method which enables welding of high Cr steels requiring no pre- and post-weld heat treatments. In the welding material known from this prior art, the carbon content is from 0.005 to 0.12 wt %.

It is an object of the invention to advantageously solve the above-mentioned problem in the related art and to provide a matching welding material for inexpensive low carbon martensitic stainless steel, which enables pre-heating and PWHT to be omitted and which can provide a weld metal having high toughness and superior corrosion resistance as a welding material for low carbon martensitic stainless steel pipes mainly used as line pipes. It is another object of the present invention to provide arc welding of low carbon martensitic stainless steel materials which can produce a low carbon martensitic stainless steel welded structure which has a weld metal having high toughness and superior corrosion resistance.

We have intensively investigated to find factors which influence toughness and corrosion resistance, especially resistance to preferential corrosion of martensitic stainless steel weld metal to achieve the above-mentioned objects.

As a result, we have discovered that the toughness of weld metal is significantly improved by reducing the total amount of carbon and nitrogen to 0.02% by mass or less. Furthermore, we have discovered that preferential corrosion of weld metal can be prevented by rendering the weld metal electrochemically noble as compared to the base metal, and have discovered that chromium, nickel, molybdenum, and copper are effective to render the weld metal electrochemically noble. It is important to increase the contents of chromium, nickel, molybdenum, and copper in the weld metal in a specific range relative to the contents of chromium, nickel, molybdenum, and copper in the base metal.

However, if the alloy elements present in the weld metal are in excess relative to those in the base metal, they tend to cause preferential corrosion in the heat-affected zone and the base metal zone. Based on these findings, we have discovered that preferential corrosion in a chloride solution at a low pH such as an aqueous solution of sodium chloride saturated with carbon dioxide can be prevented by controlling the following parameter X to -0.5 to 5.0;

$$X= (Cr_w-Cr_B) + (Ni_w-Ni_B)/2+ (Mo_w-Mo_B) + (Cu_w-Cu_B)/4$$

wherein $Cr_w$, $Ni_w$, $Mo_w$, and $Cu_w$ each represents the content of the corresponding element in the weld metal (in % by mass) and $Cr_B$, $Ni_B$, $Mo_B$, and $Cu_B$ each represents the content of the corresponding element in the low carbon martensitic stainless steel (in % by mass).

## SUMMARY OF THE INVENTION

The present invention relates to a welding material for low carbon martensitic stainless steel, as defined in claim 1.

The present invention also relates to an arc welding method of low carbon martensitic stainless steel materials as defined in claim 2. Preferred embodiments thereof are defined in the depedent sub-claims 3 to 9.

## DESCRIPTION OF THE PREFERRED EMBODIMENTS

Although the welding material according to the present invention is mainly for use for gas tungsten arc welding (GTAW) and gas metal arc welding (GMAW), the welding material according to the present invention can be used for submerged arc welding (SAW) and shielded metal arc welding (SMAW).

Firstly, the reasons for limiting the amount of each component of the welding material according to the present invention will be described. The term "% by mass" in the composition will be referred to simply as % hereinafter.

Total carbon and nitrogen: 0.02% or less and 0.009% or less of carbon.

Both carbon and nitrogen significantly increase the toughness of the weld metal. However, if the two elements are present in excess, they decrease the toughness. In this connection, the contents of carbon and nitrogen are preferably as low as possible in the range in which the desired strength is ensured. The upper limit has been set at 0.02% because the total amount of carbon and nitrogen exceeding 0.02% significantly decreases the toughness of the weld metal. The total amount of carbon and nitrogen are 0.01% or more in order to ensure strength.

Silicon: 0.5% or less

Silicon is an $\alpha$ phase-stabilizing element and accounts for a decrease in toughness, if present in excess, due to the formation of $\delta$-ferrite phase. Furthermore, silicon is a deoxidizing element and acts to stabilize the arc to thereby improve weldability. These effects are significantly apparent when silicon is present in an amount of 0.01% or more. However, if silicon is present in an amount of 0.5% or more, the element decreases the toughness. Therefore, an upper limit of 0.5% has been set.

Manganese: 0.2 to 3%

Manganese works as a deoxidizer for weld metal and increases the strength of the weld metal. These effects are found if manganese is present in an amount of 0.2% or more. However, if the manganese content exceeds 3%, it increases strength of the weld metal too much, leading to difficulty in manufacturing. Therefore, the manganese content is set in the range or 0.2 to 3%.

Chromium: 11 to 15%

Chromium increases the corrosion resistance and strength of the weld metal and needs to be present in an amount of 11% or more in the present invention. On the other hand, if the chromium content exceeds 15%, $\delta$-ferrite remains in the weld metal and decreases the toughness. Therefore, the chromium content has been set in the range of 11 to 15%.

Nickel: 2 to 7%

Nickel is an austenite-stabilizing element and suppresses the formation of $\delta$-ferrite to thereby improve the toughness of the weld metal effectively. A nickel content of 2% or more is necessary in order to ensure the toughness of the weld metal. On the other hand, a nickel content exceeding 7% leaves excessive austenite to thereby decrease the strength. Therefore, the nickel content has been set in the range of 2 to 7%. The content is preferably 5 to 7% in order to ensure more stable toughness.

In addition to the above-mentioned main components, the welding material according to the present invention may contain the following elements, as necessary.

Either or both of 2% or less of copper and 4% or less of molybdenum:

Copper and molybdenum increase the corrosion resistance and strength of the weld metal and either or both of the elements may be present as necessary. However, the molybdenum content exceeding 4% leaves $\delta$-ferrite in the weld metal and forms an intermetallic compound to thereby decrease the toughness. Therefore, the molybdenum content is preferably limited to 4% or less. The molybdenum content is preferably 2 to 3% in order to ensure more stable characteristics.

A copper content exceeding 2% decreases productivity of the weld material. Therefore, the copper content is preferably limited to 2% or less, more preferably in the range of 0.5 to 1.5%.

A total of 0.3% or less of either or both of vanadium and titanium:

Both of vanadium and titanium form carbides and nitrides to thereby increase the strength. Either or both of these elements may be present as necessary. Because a total content exceeding 0.3% of vanadium and titanium significantly decreases the toughness, an upper limit of 0.3% is preferably set. More preferably, the total content of the two elements is 0.03 to 0.15%.

REM: 0.3% or less

REM (rare earth metals) can stabilize the arc even if GMAW is employed in a pure inert gas atmosphere such as Ar and He which is free from active gases such as $CO_2$ and $O_2$ and may be present as necessary in the present invention. They can reduce oxides which account for a decrease in the toughness of the weld metal and improve the toughness of the weld metal in the pure inert gas atmosphere which is free from active gas such as $CO_2$ and $O_2$. Accordingly, REM can concurrently achieve at high level the stabilization of arc and the toughness in welded metal during GMAW. If the content of the REM exceeds 0.3%, the toughness and processability of the weld metal decrease. Therefore, the content of the REM is preferably limited to 0.3% or less.

The balance of iron and incidental impurities:

The balance of the above-mentioned components is substantially iron. Furthermore, 0.01% or less of sulfur,

EP 1 112 804 B1

0.03% or less of phosphorus, and 0.01% or less of oxygen are acceptable as impurities.

Incidentally, the contents of chromium, nickel, molybdenum, and copper in the welding material are selected in the above-described ranges such that the value of X falls into a predetermined range, X being defined by a difference between the contents of chromium, nickel, molybdenum, and copper in the weld metal and the contents of the same elements in low carbon martensitic stainless steel materials (base metal) to be welded.

Any of the known low carbon martensitic stainless steel materials are suitable for being welded by arc welding by using the welding material according to the present invention. Preferably, the low carbon martensitic stainless steel materials to which the present invention pertains have a chemical composition as described below.

The low carbon martensitic stainless steel materials preferably contains 0.05 % by mass or less of carbon, about 1.0 % by mass of silicon, 0.10 to 3.0% by mass of manganese, 0.03% by mass or less of phosphorus, 0.01% by mass or less of sulfur, 10 to 14 % by mass of chromium, 0.03% by mass or less of nitrogen, and 1.0 to 7.0 % by mass of nickel, optionally further contains 0.2 to 3.5 % by mass of molybdenum and/or 0.2 to 2.0 % by mass of copper, the balance consisting of iron and inevitable impurities. Alternatively, the low carbon martensitic stainless steel materials preferably further contains one or more elements selected from 0.005 to 0.20% of vanadium, 0.005 to 0.20% of niobium, 0.005 to 0.10% of titanium, and 0.005 to 0.10% of zirconium. The low carbon martensitic stainless steel materials to which the present invention pertains have reduced amounts of carbon and nitrogen to improve the toughness of the base metal and the weldability. Carbon is present in an amount of 0.05% or less, preferably 0.02% or less, and nitrogen is present in an amount of

0.05% or less, preferably 0.02% or less. The steel materials in the present invention are intended to include steel pipes, steel plates, and steel strips.

In the welding method according to the present invention, arc welding is conducted by using a welding material which has a composition in about the above-described range and which contains chromium, nickel, molybdenum, and copper in amounts substantially satisfying the following formula (1) relative to the contents of chromium, nickel, molybdenum, and copper in low carbon martensitic stainless steel materials (base metal) which are materials to be welded;

$$-0.5 \leq X \leq 5.0 \quad \ldots \quad (1)$$

wherein $X = (Cr_W - Cr_B) + (Ni_W - Ni_B)/2 + (Mo_W - Mo_B) + (Cu_W - Cu_B)/4$; $Cr_W$, $Ni_W$, $Mo_W$, and $Cu_W$ each represents the content of corresponding element in the weld metal (in % by mass) and $Cr_B$, $Ni_B$, $Mo_B$, and $Cu_B$ each represents the content of corresponding element in the low carbon martensitic stainless steel (in % by mass).

Preferential corrosion can be prevented by holding the value of X in a specific range, X being defined by the formula (1) as a function of a difference in the contents of chromium, nickel, molybdenum, and copper in the base metal and the weld metal. When X is below -0.5, the weld metal is electrochemically basic relative to the base metal, which causes preferential corrosion in the weld metal. On the other hand, if X exceeds 5.0, the weld metal zone is electrochemically noble relative to the base metal, which causes preferential corrosion in the base metal or the heat-affected zone. When an element is not present, its content shall be taken as 0 in calculating X in the formula (1).

The contents of chromium, nickel, molybdenum, and copper in the welding material are preferably adjusted in the above-mentioned range of each component such that the formula (1) is satisfied in view of the dilution ratio of the base metal according to arc welding conditions and in anticipation of the contents of chromium, nickel, molybdenum, and copper in the weld metal.

Furthermore, as for arc welding, although the direct current welding method of reverse polarity, in which a wire, a consumable electrode is connected to the positive side, is often employed, the direct current welding method of straight polarity, in which a wire is connected to the negative side, as well as arc welding which utilizes an alternating power source as a welding source can be employed to produce weld zones having excellent characteristics without any problems when the welding material according to the present invention is used. Welding conditions can be selected from a wide variety of conditions by using the welding material according to the present invention and subjecting the same to the direct current welding method of positive polarity or alternating current welding.

In the present invention, low carbon martensitic stainless steel materials which contain 0.05 % or less by mass of carbon, 10 to 14 % by mass of chromium, and 1.0 to 7.0 % by mass of nickel, optionally further comprising

0.2 to 3.5 % by mass of molybdenum and/or 0.2 to 2.0 % by mass of copper, are subjected to arc welding by using a welding material which contains chromium, nickel, molybdenum, and copper such that the formula (1) is satisfied to produce a low carbon martensitic stainless steel welded structure. In the welded structure, the weld metal in the weld zone contains chromium, nickel, molybdenum, and copper in amounts which satisfy the formula (1) to thereby prevent development of preferential corrosion in the weld zone. Examples of the welded structure include line pipe joints with girth welding (pipe lines), piping for chemical plants, and bridges, for example.

EXAMPLE 1

Low carbon martensitic stainless steel tubes (219 mm in diameter and 12.7 mm in thickness) having chemical composition shown in Table 1 as a base metal were subjected to girth welding by GTAW (gas tungsten arc welding) with a heat input of 11 to 17 kJ/cm in an argon atmosphere by using a wire (a welding material) having a diameter of 3.2 mm and the chemical composition shown in Table 2 to produce a welded structure (a steel pipe joint). The geometry of groove was V-shaped groove with an angle of 70˚. A duplex stainless steel welding material was also used as a conventional example (welding material No. 15). The contents of chromium, nickel, molybdenum, and copper in the weld metal were determined based on the composition of the base metal and the welding conditions to adjust the contents of chromium, nickel, molybdenum, and copper in the welding material. Heat treatment was conducted neither before or after the girth welding.

Sample pieces were collected according to API Standard 1104 for the welded joint by the girth welding of these welded structures and each sample was evaluated for the strength of the welded joint by tensile test and for the toughness by Charpy impact test. The results of the tensile test are shown as UM which means rupture took place at the weld metal or a circle which means rupture took place at a location other than the weld metal. The results of the Charpy impact test are shown as a cross which means the fracture transition temperature was above -40˚C or a circle which means the fracture transition temperature was -40˚C or less.

Moreover, corrosion resistance tests of the weld zone were conducted, by immersing the sample pieces for 168 hours into a 10% NaCl aqueous solution (temperature: 165˚C) saturated with carbon dioxide at 5.0 MPa and visually and microscopically observing the sample pieces for preferential corrosion. When preferential corrosion was found through the observation, the location is described. When preferential corrosion was not found, the result is shown as a circle.

These results are shown in Table 3.

It is clearly seen the examples according to present invention are low carbon martensitic stainless steel welded structures which do not require pre-heating or PWHT and which provide weld metals having superior strength and toughness and which do not cause preferential corrosion of the weld metal and which have weld zones having superior corrosion resistance.

On the other hand, the comparative examples which have deviated from the scope of the present invention (Joint No.T-4, No.T-5, No.T-6, No.T-7, No.T-8, No.T-9, No.T-12, No.T-16, No.T-18, and No.T-19) had a reduced strength of the weld metal or a reduced toughness of the weld metal or showed preferential corrosion at either the weld metal (WM), the heat-affected zone (HAZ), or the base metal (BM). The conventional example which employed a duplex stainless steel welding material (Joint No.W-17) showed preferential corrosion at HAZ and BM.

As shown above, low carbon martensitic stainless steel materials can be welded with high productivity and reliably and weld zones having superior characteristics can be obtained by using the welding material according to the present invention and employing the arc welding method according to the present invention.

EXAMPLE 2

Low carbon martensitic stainless steel tubes (219 mm in diameter and 12.7 mm in thickness) having chemical composition shown in Table 1 as a base metal were subjected to girth welding by GMAW (gas metal arc welding) by using a wire (a welding material) with a diameter of 0.9 to 1.2 mm and the chemical composition shown in Table 2 to produce a welded structure (a steel pipe joint). The arc welding conditions were selected from combinations of four kinds of shielding gas, i.e., Ar (referred to as Ar), Ar + 30% by volume of He (referred to as Ar/He), Ar + 1% by volume of $CO_2$ (referred to as Ar/Co$_2$), and Ar + 30% by volume of He + 1% by volume of $CO_2$ (referred to as Ar/CO$_2$/He) and three kinds of welding methods, i.e., direct current welding of reverse polarity, direct current welding of straight polarity, and welding which utilizes alternating current as a power source. Furthermore, heat inputs were 12 to 22 kJ/cm. The geometry of groove was V-shaped groove with an angle of 70˚. The contents of chromium, nickel, molybdenum, and copper in the weld metal were estimated based on the composition of the base metal and the welding conditions to adjust the contents of chromium, nickel, molybdenum, and copper in the welding material as in EXAMPLE 1. Heat treatment was conducted neither before or after the girth welding as in EXAMPLE 1.

The welded joint by the girth welding of these welded structures were evaluated for the strength of the welded joint by tensile test and for the toughness by Charpy impact test as in EXAMPLE 1. The results of the tensile test and the Charpy impact test are shown as a circle which means rupture took place at a location other than the weld metal, and as a cross which means the fracture transition temperature was above -40˚C or a circle which means the fracture transition temperature was -40˚C or less, respectively, as in EXAMPLE 1.

Moreover, corrosion resistance tests of the weld zone were conducted as in EXAMPLE 1. The results were shown as in EXAMPLE 1, i.e., when preferential corrosion was found through the observation, the location is described and when preferential corrosion was not found, the result is shown as a circle.

The results are shown in Table 4.

It is clearly seen the examples according to present invention are low carbon martensitic stainless steel welded structures which do not require pre-heating or PWHT and which can provide weld metals having superior strength and toughness and which do not cause preferential corrosion of the weld metal and which have weld zones having superior corrosion resistance even if the arc welding conditions such as shielding gas and polarity are changed.

On the other hand, the comparative examples which have deviated from the scope of the present invention (Joint No.M-6, No.M-7, and No.M-17) had a reduced strength of the weld metal or a reduced toughness of the weld metal or showed preferential corrosion at the weld metal (WM).

As shown above, low carbon martensitic stainless steel materials can be welded with high productivity and reliably and weld zones having superior characteristics can be obtained by using the welding material according to the present invention and employing the arc welding method according to the present invention.

[Table 1]

| Steel material No. | Chemical components (in % by mass) | | | | | | | | | | Properties of base metal | | |
|---|---|---|---|---|---|---|---|---|---|---|---|---|---|
| | C | Si | Mn | P | S | Cr | Ni | Mo | Cu | N | YS(MPa) | TS(MPa) | vTrs(°C) |
| A | 0.011 | 0.16 | 0.41 | 0.013 | 0.0015 | 11.98 | 5.12 | 1.98 | – | 0.008 | 608 | 805 | <100 |
| B | 0.008 | 0.35 | 0.46 | 0.014 | 0.0013 | 11.89 | 6.23 | 2.54 | 0.49 | 0.008 | 615 | 810 | <100 |

[Table 2]

| Welding material No. | Chemical components (in % by mass) | | | | | | | | | | | | | | | Note |
|---|---|---|---|---|---|---|---|---|---|---|---|---|---|---|---|---|
| | C | N | Si | Mn | P | S | Cr | Ni | Mo | Cu | V | Ti | V+Ti | REM | C+N | |
| 1 | 0.005 | 0.005 | 0.21 | 0.35 | 0.015 | 0.005 | 12.30 | 5.89 | 2.87 | - | - | - | - | - | 0.010 | Example according to the present invention |
| 2 | 0.008 | 0.008 | 0.35 | 0.46 | 0.023 | 0.002 | 11.89 | 6.23 | 2.54 | - | - | - | - | - | 0.016 | Example according to the present invention |
| 3 | 0.009 | 0.009 | 0.42 | 1.20 | 0.013 | 0.003 | 13.50 | 6.78 | 2.68 | - | - | - | - | - | 0.018 | Example according to the present invention |
| 4 | 0.012 | 0.013 | 0.15 | 0.89 | 0.017 | 0.003 | 12.98 | 5.98 | 3.79 | - | - | - | - | - | 0.025 | Comparative Example |
| 5 | 0.018 | 0.017 | 0.18 | 2.40 | 0.021 | 0.002 | 12.40 | 6.65 | 3.41 | - | - | - | - | - | 0.035 | Comparative Example |
| 6 | 0.020 | 0.028 | 0.29 | 1.44 | 0.009 | 0.002 | 12.15 | 6.41 | 2.79 | - | - | - | - | - | 0.048 | Comparative Example |
| 7 | 0.007 | 0.008 | 0.15 | 0.41 | 0.018 | 0.001 | 11.83 | 3.98 | 1.91 | - | - | - | - | - | 0.015 | Example according to the present invention |
| 8 | 0.008 | 0.008 | 0.20 | 0.57 | 0.020 | 0.003 | 12.20 | 4.85 | 1.85 | - | - | - | - | - | 0.016 | Example according to the present invention |
| 9 | 0.008 | 0.007 | 0.15 | 2.12 | 0.011 | 0.002 | 11.24 | 3.15 | - | 0.89 | - | - | - | - | 0.015 | Example according to the present invention |
| 10 | 0.007 | 0.008 | 0.20 | 1.57 | 0.014 | 0.002 | 12.43 | 6.33 | 2.14 | 1.46 | - | - | - | - | 0.015 | Example according to the present invention |
| 11 | 0.006 | 0.008 | 0.18 | 0.34 | 0.018 | 0.003 | 14.57 | 4.98 | 2.36 | - | 0.123 | - | 0.123 | - | 0.014 | Example according to the present invention |
| 12 | 0.007 | 0.008 | 0.24 | 0.76 | 0.015 | 0.001 | 13.45 | 5.28 | 2.78 | - | - | 0.084 | 0.084 | - | 0.015 | Example according to the present invention |
| 13 | 0.007 | 0.008 | 0.34 | 1.14 | 0.017 | 0.002 | 12.23 | 5.68 | 3.45 | - | 0.085 | 0.054 | 0.139 | - | 0.015 | Example according to the present invention |
| 14 | 0.008 | 0.007 | 0.28 | 2.34 | 0.022 | 0.003 | 13.45 | 6.12 | 2.65 | - | 0.217 | 0.149 | 0.366 | - | 0.015 | Comparative Example |
| 15 | 0.014 | 0.265 | 0.30 | 0.38 | 0.017 | 0.003 | 25.30 | 9.54 | 4.01 | - | - | - | - | - | 0.279 | Conventional Example |
| 16 | 0.007 | 0.006 | 0.18 | 1.83 | 0.015 | 0.002 | 11.24 | 1.43 | 0.48 | - | - | - | - | - | 0.013 | Comparative Example |
| 17 | 0.008 | 0.007 | 0.23 | 0.81 | 0.013 | 0.002 | 12.81 | 6.39 | 4.53 | - | - | - | - | - | 0.015 | Comparative Example |
| 18 | 0.007 | 0.008 | 0.21 | 0.72 | 0.013 | 0.002 | 12.78 | 6.02 | 2.51 | - | - | - | - | 0.015 | 0.015 | Example according to the present invention |
| 19 | 0.008 | 0.006 | 0.22 | 0.75 | 0.015 | 0.002 | 12.69 | 6.13 | 2.48 | - | - | - | - | 0.051 | 0.014 | Example according to the present invention |

| | | | | | | | | | | | | | | | | |
|---|---|---|---|---|---|---|---|---|---|---|---|---|---|---|---|---|
| 20 | 0.008 | 0.005 | 0.24 | 0.69 | 0.013 | 0.002 | 12.46 | 5.89 | 2.38 | - | - | - | - | 0.075 | 0.013 | Example according to the present invention |
| 21 | 0.007 | 0.008 | 0.45 | 2.30 | 0.014 | 0.002 | 11.98 | 6.66 | 2.48 | - | - | - | - | 0.212 | 0.013 | Example according to the present invention |
| 22 | 0.008 | 0.008 | 0.19 | 1.45 | 0.019 | 0.002 | 13.24 | 6.26 | 2.87 | - | - | - | - | 0.355 | 0.016 | Comparative Example |

Table 3

| Joint No. | Combination | | Welding method | Composition of weld metal | | | | X * | Conformity to formula (1) ** | Properties of welded zone | | | | | Note |
|---|---|---|---|---|---|---|---|---|---|---|---|---|---|---|---|
| | Steel material No. | Welding material No. | | $Cr_w$ | $Ni_w$ | $Mo_w$ | $Cu_w$ | | | Tensile properties | | Impact properties | | Corrosion resistance | |
| | | | | | | | | | | Tensile strength MPa | Fracture location | vTrs °C | Evaluation | | |
| T-1 | A | 1 | GTAW | 12.28 | 5.85 | 2.79 | – | 1.48 | O | 825 | O | <-60 | O | O | Example according to the present invention |
| T-2 | A | 2 | GTAW | 11.90 | 6.20 | 2.55 | – | 1.03 | O | 820 | O | <-60 | O | O | Example according to the present invention |
| T-3 | A | 3 | GTAW | 13.44 | 6.78 | 2.65 | – | 2.96 | O | 806 | O | <-60 | O | O | Example according to the present invention |
| T-4 | B | 3 | GTAW | 13.40 | 6.54 | 2.61 | – | 7.08 | × | 798 | O | <-60 | O | HAZ, BM | Comparative Example |
| T-5 | A | 4 | GTAW | 12.91 | 5.97 | 3.74 | – | 3.12 | O | 809 | O | -30 | × | O | Comparative Example |
| T-6 | A | 5 | GTAW | 12.30 | 6.41 | 3.28 | – | 2.27 | O | 811 | O | -15 | × | O | Comparative Example |
| T-7 | A | 6 | GTAW | 12.11 | 6.38 | 2.80 | – | 1.58 | O | 827 | O | +5 | × | O | Comparative Example |
| T-8 | B | 6 | GTAW | 12.14 | 6.48 | 2.74 | – | 5.92 | × | 797 | O | +5 | × | HAZ, BM | Comparative Example |
| T-9 | A | 7 | GTAW | 11.82 | 4.00 | 1.89 | – | -0.81 | × | 814 | O | <-60 | O | WM | Comparative Example |
| T-10 | A | 8 | GTAW | 12.14 | 4.81 | 1.80 | – | -0.18 | O | 811 | O | <-60 | O | O | Example according to the present invention |
| T-11 | B | 8 | GTAW | 12.05 | 4.77 | 1.85 | – | 4.08 | O | 803 | O | <-60 | O | O | Example according to the present invention |
| T-12 | A | 9 | GTAW | 11.32 | 3.29 | – | 0.87 | -3.34 | × | 771 | UM | -40 | O | WM | Comparative Example |
| T-13 | A | 11 | GTAW | 14.38 | 4.87 | 2.35 | – | 2.65 | O | 817 | O | <-60 | O | O | Example according to the present invention |
| T-14 | A | 12 | GTAW | 13.44 | 5.26 | 2.68 | – | 2.23 | O | 825 | O | <-60 | O | O | Example according to the present invention |
| T-15 | A | 13 | GTAW | 12.23 | 5.61 | 3.38 | – | 1.90 | O | 819 | O | <-60 | O | O | Example according to the present invention |
| T-16 | A | 14 | GTAW | 13.39 | 6.11 | 2.55 | – | 2.48 | O | 809 | O | -10 | × | O | Comparative Example |
| T-17 | A | 15 | GTAW | 24.98 | 9.41 | 3.96 | – | 17.13 | × | 820 | O | <-60 | O | HAZ, BM | Conventional Example |
| T-18 | A | 16 | GTAW | 11.25 | 1.81 | 0.53 | – | 0.52 | O | 818 | O | -10 | × | WM | Comparative Example |
| T-19 | A | 17 | GTAW | 12.61 | 6.22 | 4.31 | – | 3.51 | O | 821 | O | -5 | × | O | Comparative Example |

| T-20 | A | 19 | GTAW | 12.61 | 5.81 | 2.33 | - | 1.33 | O | 820 | O | <-60 | O | O | Example according to the present invention |
|------|---|----|------|-------|------|------|---|------|---|-----|---|------|---|---|---------------------------------------------|

\*) $X=(Crw-CrB)+(Niw-NiB)/2+(Mow-MoB)+(Cuw-CuB)/4$

\*\*) Conformity to the formula (1): $-0.5 \leq X \leq 5.0$ is shown as a circle; nonconformity is shown as a cross

Table 4

| Joint No. | Combination | | Welding condition | | | Composition of weld metal | | | | X' |
|---|---|---|---|---|---|---|---|---|---|---|
| | Steel material No. | Welding material No. | Welding method | Shielding gas | Polarity | $Cr_w$ | $Ni_w$ | $Mo_w$ | $Cu_w$ | |
| M-1 | A | 1 | GMAW | Ar | Reversed | 12.11 | 5.71 | 2.61 | - | 1.06 |
| M-2 | | | GMAW | Ar | Positive | 12.15 | 5.78 | 2.71 | - | 1.23 |
| M-3 | | | GMAW | Ar | Alternating current | 12.21 | 5.81 | 2.75 | - | 1.35 |
| M-4 | | | GMAW | Ar/He | Positive | 12.18 | 5.79 | 2.81 | - | 1.37 |
| M-5 | | | GMAW | Ar/He/$CO_2$ | Reversed | 12.09 | 5.81 | 2.78 | - | 1.26 |
| M-6 | A | 4 | GMAW | Ar/$CO_2$ | Reversed | 12.88 | 5.91 | 3.61 | - | 2.93 |
| M-7 | | 7 | GMAW | Ar/$CO_2$ | Reversed | 11.81 | 3.90 | 1.84 | - | -0.92 |
| M-8 | B | 9 | GMAW | Ar/$CO_2$ | Reversed | 11.30 | 3.20 | - | 0.82 | 0.90 |
| M-9 | A | 10 | GMAW | Ar/$CO_2$ | Reversed | 12.40 | 6.40 | 2.04 | 1.44 | 1.49 |
| M-10 | A | 18 | GMAW | Ar | Reversed | 12.69 | 5.99 | 2.47 | - | 1.64 |
| M-11 | A | 19 | GMAW | Ar | Reversed | 12.54 | 6.01 | 2.39 | - | 1.42 |
| M-12 | | | GMAW | Ar | Positive | 12.56 | 6.03 | 2.41 | - | 1.47 |
| M-13 | | | GMAW | Ar/He | Positive | 12.51 | 5.99 | 2.37 | - | 1.36 |
| M-14 | | | GMAW | Ar/He | Alternating current | 12.60 | 6.05 | 2.38 | - | 1.49 |
| M-15 | A | 20 | GMAW | Ar/$CO_2$ | Reversed | 12.46 | 5.78 | 2.39 | - | 1.22 |
| M-16 | A | 21 | GMAW | Ar | Positive | 11.81 | 6.48 | 2.59 | 0.95 | 1.36 |
| M-17 | A | 22 | GMAW | Ar/$CO_2$ | Reversed | 13.11 | 6.08 | 2.83 | - | 2.46 |

| Conformity to formula (1) .. | Properties of welded zone | | | | | Note | |
|---|---|---|---|---|---|---|---|
| | Tensile properties | | Impact properties | | Corrosion resistance | | |
| | Tensile strength MPa | Fracture location | vTrs°C | Evaluation | | | |
| ○ | 821 | ○ | <-60 | ○ | ○ | Example according to the present invention | |

(continued)

| Conformity to formula (1) .. | Properties of welded zone | | | | | Note |
|---|---|---|---|---|---|---|
| | Tensile properties | | Impact properties | | Corrosion resistance | |
| | Tensile strength MPa | Fracture location | vTrs°C | Evaluation | | |
| ○ | 818 | ○ | <-60 | ○ | ○ | Example according to the present invention |
| ○ | 811 | ○ | <-60 | ○ | ○ | Example according to the present invention |
| ○ | 809 | ○ | <-60 | ○ | ○ | Example according to the present invention |
| ○ | 820 | ○ | -45 | ○ | ○ | Example according to the present invention |
| ○ | 806 | ○ -10 | | × | ○ | Comparative Example |
| × | 808 | ○ | -40 | ○ | WM | Comparative Example |
| ○ | 801 | ○ | -40 | ○ | ○ | Example according to the present invention |
| ○ | 818 | ○ | -45 | ○ | ○ | Example according to the present invention |
| ○ | 808 | ○ | <-60 | ○ | ○ | Example according to the present invention |
| ○ | 817 | ○ | <-60 | ○ | ○ | Example according to the present invention |
| ○ | 815 | ○ | <-60 | ○ | ○ | Example according to the present invention |
| ○ | 807 | ○ | <-60 | ○ | ○ | Example according to the present invention |
| ○ | 811 | ○ | <-60 | ○ | ○ | Example according to the present invention |
| ○ | 817 | ○ | -45 | ○ | ○ | Example according to the present invention |
| ○ | 817 | ○ | -40 | ○ | ○ | Example according to the present invention |
| ○ | 816 | ○ | -5 | × | ○ | Comparative Example |

*) $X=(Cr_w-Cr_B)+(Ni_w-Ni_B)/2+(Mo_w-Mo_B)+(Cu_w-Cu_B)/4$

**) Conformity to the formula (1): $-0.5 \leq X \leq 5.0$ is shown as a circle; nonconformity is shown as a cross

## Claims

1. A welding material for low carbon martensitic stainless steel material, **characterized in that** the welding material has a chemical composition comprising 0.02% by mass or less of carbon and nitrogen in total, 0.009% by mass or less of carbon, 0.5% by mass or less of silicon, 0.2% to 3% by mass of manganese, 11 to 15% by mass of chromium, and 2 to 7% by mass of nickel, optionally
either or both of 2% by mass or less of copper and 4% by mass or less of molybdenum, optionally a total of 0.3% by mass of either or both of vanadium and titanium, optionally a total of 0.3% by mass of REM, the balance being iron and inevitable impurities.

2. A method of welding low carbon martensitic stainless steel materials having a chemical composition comprising 0.05% or less by mass or less of carbon, 10 to 14% by mass of chromium, and 1.0 to 7.0 % by mass of nickel, optionally 0.2 to 3.5% by mass of molybdenum and/or 0.2 to 2.0% by mass of copper, optionally one or more elements selected from 0.005 to 0.20% of vanadium, 0.005 to 0.20% of niobium, 0.005 to 0.10% of titanium , and 0.005 to 0.10% of zirconium, by arc welding wherein the weld material used in the arc welding comprises 0.02 % by mass or less of carbon and nitrogen in total, 0.009% by mass or less of carbon, 0.5% by mass or less of silicon, 0.2 to 3% by mass of manganese, 11 to 15% by mass of chromium, and 2 to 7% by mass of nickel, optionally either or both of 2% by mass or less of copper and 4% by mass or less of molybdenum optionally 0.3% by mass or less of either or both of vanadium and titanium optionally 0.3% by mass or less of REM, and
contains chromium, nickel, molybdenum, and copper such that the contents of chromium ($Cr_w$), nickel ($Ni_w$), molybdenum ($Mo_w$), and copper ($Cu_w$) in the weld metal have a relationship with the contents of chromium ($Cr_B$), nickel ($Ni_B$), molybdenum ($Mo_B$), and copper ($Cu_B$) in the low carbon martensitic stainless steel materials which satisfies the following formula (1)

$$-0.5 \leq X \leq 5.0 \quad \ldots \quad (1)$$

wherein X= ($Cr_w$-$Cr_B$) + ($Ni_w$-$Ni_B$) /2+ ($Mo_w$-$Mo_B$) + ($Cu_w$-$Cu_B$) /4; $Cr_w$, $Ni_w$, $Mo_w$, and $Cu_w$ each represents the content of corresponding element in the weld metal (in % by mass) and $Cr_B$, $Ni_B$, $Mo_B$, and $Cu_B$ each represents the content of corresponding element in the low carbon martensitic stainless steel materials (in % by mass), the balance being iron and inevitable impurities.

3. An arc welding method of low carbon martensitic stainless steel materials according to Claim 2, wherein the arc welding is gas metal arc welding which utilizes a shielded gas of Ar, He or these mixed gas.

4. An arc welding method of low carbon martensitic stainless steel materials according to Claim 2 or 3, wherein the arc welding is gas metal arc welding of straight polarity in which a wire is used as the negative side.

5. An arc welding method of low carbon martensitic stainless steel materials according to Claim 2, or 3 wherein the arc welding is gas metal arc welding which utilizes an alternating current power source as a welding source.

## Patentansprüche

1. Ein Schweißzusatzwerkstoff für ein niedriggekohltes martensitisches rostfreies Stahlmaterial, **dadurch gekennzeichnet, dass** der Schweißzusatzwerkstoff eine chemische Zusammensetzung hat, umfassend: insgesamt 0,02 Gew.-% oder weniger an Kohlenstoff und Stickstoff, 0,009 Gew.-% oder weniger an Kohlenstoff, 0,5 Gew.-% oder weniger an Silizium, 0,2% bis 3 Gew.-% an Mangan, 11 bis 15 Gew.% an Chrom und 2 bis 7 Gew.-% an Nickel, wahlweise
eines oder beide von 2 Gew.-% oder weniger an Kupfer und 4 Gew.-% oder weniger an Molybden, wahlweise eine Gesamtmenge von 0,3 Gew.-% von eines oder beide von Vanadium und Titan, wahlweise eine Gesamtmenge von 0,3 Gew.-% an REM, der Rest ist Eisen und unvermeidbare Verunreinigungen.

2. Ein Verfahren zum Schweißen von niedriggekohlten martensitischen rostfreien Stahlmaterialien mit einer chemischen Zusammensetzung umfassend: 0,05 Gew.-% oder weniger an Kohlenstoff, 10 bis 14 Gew.-% an Chrom und 1,0 bis 7,0 Gew.% an Nickel,
wahlweise

0,2 bis 3,5 Gew.-% an Molybden und/oder 0,2 bis 2,0 Gew.-% an Kupfer, wahlweise

eine oder mehrere Komponenten ausgewählt aus 0,005 bis 0,20% an Vanadium, 0,005 bis 0,20% an Niobium, 0,005 bis 0,10% an Titan und 0,005 bis 0,10% an Zirkonium durch Lichtbogenschweißen, wobei der beim Lichtbogenschweißen benutzte Schweißzusatzwerkstoff umfasst: insgesamt 0,02 Gew.-% oder weniger an Kohlenstoff und Stickstoff, 0,009 Gew.-% oder weniger an Kohlenstoff, 0,5 Gew.-% oder weniger an Silizium, 0,2% bis 3 Gew.-% an Mangan, 11 bis 15 Gew.-% an Chrom und 2 bis 7 Gew.-% an Nickel,

wahlweise eines oder beide von 2 Gew.-% oder weniger an Kupfer und 4 Gew.-% oder weniger an Molybden, wahlweise eine Gesamtmenge von 0,3 Gew.-% oder weniger von eines oder beide von Vanadium und Titan, wahlweise eine Gesamtmenge von 0,3 Gew.-% oder weniger an REM, und

enthält Chrom, Nickel, Molybden und Kupfer, so dass die Anteile an Chrom ($CR_w$), Nickel ($Ni_w$), Molybden ($Mo_w$) und Kupfer ($Cu_w$) in dem Schweißzusatzwerkstoff ein Verhältnis mit den Anteilen von Chrom ($Cr_B$), Nickel ($Ni_B$), Molybden ($Mo_B$) und Kupfer ($Cu_B$) in den niedriggekohlten martensitischen rostfreien Stahlmaterialien haben, welches die folgende Gleichung (1) erfüllt:

$$-0,5 \le X \le 5,0 \quad \ldots \quad (1)$$

wobei $X = (Cr_w - Cr_B) + (Ni_w - Ni_B) / 2 + (Mo_w - Mo_B) + (Cu_w - Cu_B) / 4$; $Cr_w$, $Ni_w$, $Mo_w$ und $Cu_w$ bezeichnen jeweils den Anteil des entsprechenden Elementes in dem Schweißzusatzwerkstoff (in Gew.-%) und $Cr_B$, $Ni_B$, $Mo_B$ und $Cu_B$ bezeichnen jeweils den Anteil des entsprechenden Elementes in den niedriggekohlten martensitischen rostfreien Stahlmaterialien (in Gew.-%), wobei der Rest Eisen und unvermeidbare Verunreinigungen ist.

**3.** Ein Lichtbogenschweißverfahren für niedriggekohlte martensitische rostfreie Stahlmaterialien nach Anspruch 2, wobei das Lichtbogenschweißen Metall-Schutzgasschweißen ist, welches ein Schutzgas von Ar, He oder ein Gemisch dieser Gase benutzt.

**4.** Ein Lichtbogenschweißverfahren für niedriggekohlte martensitische rostfreie Stahlmaterialien nach Anspruch 2 oder 3, wobei das Lichtbogenschweißen Metall-Schutzgasschweißen bei negativer Polung der Elektrode ist, bei welcher ein Draht als die negative Seite verwendet wird.

**5.** Ein Lichtbogenschweißverfahren für niedriggekohlte martensitische rostfreie Stahlmaterialien nach Anspruch 2 oder 3, wobei das Lichtbogenschweißen Metall-Schutzgasschweißen ist, welches eine Wechselstrom-Energiequelle als eine Schweißquelle verwendet.

## Revendications

**1.** Matériau de soudage pour un matériau en acier inoxydable martensitique à faible teneur en carbone, **caractérisé en ce que** le matériau de soudage a une composition chimique comprenant 0,02 % en masse ou moins de carbone et d'azote au total, 0,009 % en masse ou moins de carbone, 0,5 % en masse ou moins de silicium, 0,2 % à 3 % en masse de manganèse, 11 à 15 % en masse de chrome et 2 à 7 % en masse de nickel, éventuellement l'un ou les deux de 2 % en masse ou moins de cuivre et 4 % en masse ou moins du molybdène, éventuellement un total de 0,3 % en masse de l'un ou des deux du vanadium et du titane, éventuellement un total de 0,3 % en masse de REM, le reste étant constitué de fer et des impuretés inévitables.

**2.** Procédé de soudage de matériaux en acier inoxydable martensitique à faible teneur en carbone ayant une composition chimique comprenant 0, 05 % ou moins en masse de carbone, 10 à 14 % en masse de chrome et 1,0 à 7,0 % en masse de nickel, éventuellement 0,2 à 3,5 % en masse de molybdène et/ou 0,2 à 2,0 % en masse de cuivre, éventuellement un ou plusieurs des éléments choisi(s) parmi 0,005 à 0,20 % de vanadium, 0,005 à 0,20 % de niobium, 0,005 à 0,10 % de titane et 0,005 à 0,10 % de zirconium par soudage à l'arc, dans lequel le matériau de soudure utilisé dans le soudage à l'arc comprend 0,02 % en masse ou moins de carbone et d'azote au total, 0,009 % en masse ou moins de carbone, 0,5 % en masse ou moins de silicium, 0,2 à 3 % en masse de manganèse, 11 à 15 % en masse de chrome et 2 à 7 % en masse de nickel, éventuellement l'un ou les deux de 2 % en masse ou moins de cuivre et 4 % en masse ou moins de molybdène, éventuellement 0,3 % en masse ou moins de l'un ou des deux du vanadium et du titane, éventuellement 0,3 % en masse ou moins de REM, et contient du chrome, du nickel, du molybdène et du cuivre, de telle sorte que les teneurs en chrome ($Cr_w$), nickel ($Ni_w$), molybdène ($Mo_w$) et cuivre ($Cu_w$) dans le métal de soudure ont une relation avec les teneurs en chrome ($Cr_B$) , nickel ($Ni_B$), molybdène

($MO_B$) et cuivre ($Cu_B$) dans les matériaux d'acier inoxydable martensitique à faible teneur en carbone qui satisfont la formule suivante (1)

$$-0,5 \leq X \leq 5,0 \qquad \ldots \ (1)$$

dans laquelle $X = (Cr_w - Cr_B) + (Ni_w - Ni_B)\ /2 + (Mo_w - Mo_B) + (Cu_w - Cu_B)\ /4$ ; $Cr_w$, $Ni_w$, $Mo_w$ et $Cu_w$ représentent chacun la teneur en l'élément correspondant dans le métal de la soudure (en % en masse) et $Cr_B$, $Ni_B$, $Mo_B$ et $Cu_B$ représentent chacun la teneur en l'élément correspondant dans les matériaux d'acier inoxydable martensitique à faible teneur en carbone (en % en masse), le reste étant constitué de fer et des impuretés inévitables.

3. Procédé de soudage à l'arc de matériaux en acier inoxydable martensitique à faible teneur en carbone selon la revendication 2, dans lequel le soudage à l'arc est un soudage à l'arc avec un métal gazeux qui utilise un gaz protégé d'Ar, de He ou de ces gaz mélangés.

4. Procédé de soudage à l'arc de matériaux en acier inoxydable martensitique à faible teneur en carbone selon les revendications 2 ou 3, dans lequel le soudage à l'arc est un soudage à l'arc avec un métal gazeux de polarité normale, dans lequel un fil métallique est utilisé comme côté négatif.

5. Procédé de soudage à l'arc de matériaux en acier inoxydable martensitique à faible teneur en carbone selon les revendication 2 ou 3, dans lequel le soudage à l'arc est un soudage à l'arc avec un métal gazeux qui utilise une source électrique de courant alternatif comme source pour le soudage.